# EUROPEAN PATENT APPLICATION

(11) **EP 4 755 984 A1**
(43) Date of publication of application: **10.06.2026**
(21) Application number: 24849463.5
(22) Date of filing: 24.07.2024
(51) Int. Cl.: C09J 109/08, C09J 11/06, C09J 11/08, D02G 3/48, D02G 3/28

(54) **ADHESIVE COMPOSITION FOR POLYESTER TIRE CORD, POLYESTER TIRE CORD MANUFACTURING METHOD, AND TIRE CORD**

(30) Priority: 31.07.2023 KR 20230099686
(71) Applicant: HS Hyosung Advanced Materials Corporation, Seoul 04144 (KR)
(72) Inventor: HAN, Seok Jong, Goyang-si Gyeonggi-do 10234 (KR); KIM, Cheol, Seongnam-si Gyeonggi-do 13616 (KR); AHN, Deog Joong, Bucheon-si Gyeonggi-do 14508 (KR); YU, Song Jung, Seoul 02826 (KR)
(74) Representative: Westphal, Mussgnug & Partner Patentanwälte mbB
(86) International application number: PCT/KR2024/010720
(87) International publication number: WO 2025/028894

(57) **Abstract**

The present invention is directed to an adhesive composition for a polyester tire cord, a polyester tire cord manufacturing method, and a tire cord comprising same. According to the present invention, when a polyester tire cord is manufactured, the bonding force between a polyester fiber and a primary processing liquid may be increased by performing processing with the primary processing liquid which comprises a salt containing an anionic functional group, and then, crosslink density is increased by performing processing with a secondary processing liquid which comprises isoprene rubber latex, thereby enabling excellent high-temperature adhesion and also being environmentally friendly. In addition, the degree of influence on external environments is minimized, thereby enabling uniform processing liquid attachment, and thus enabling the reduction of production costs and manufacturing processability. A polyester tire cord manufactured as described above may exhibit high heat-resistant adhesion, rubber coverage, and excellent heat-resistance properties.

## Description

### Technical Field

The present invention relates to an adhesive composition for a polyester tire cord and a polyester tire cord, and more particularly, to an adhesive composition for a polyester tire cord, which, by including a first treatment solution including a salt containing an anionic functional group, may increase the bonding strength between polyester fiber and the first treatment solution, and, by including a second treatment solution including isoprene rubber latex to increase crosslinking density, may provide an environmentally friendly adhesive that not only has excellent high-temperature adhesion but also does not use environmentally hazardous substances, and a polyester tire cord.

### Background Art

Polyester fiber reinforcements, generally represented by polyethylene terephthalate (hereinafter referred to as "PET"), have excellent mechanical strength, elastic modulus, dimensional stability, and heat resistance, which are important properties that should be possessed by rubber reinforcements, and thus are widely used as reinforcements for rubber composite materials, such as tires, belts, and hoses. However, the surface of polyester fiber is inert, and thus its adhesion to rubber is poor. Therefore, studies have been conducted on methods of improving the adhesion of the fiber to rubber by treating the fiber surface with para-chlorophenol-based RF resin (PEXUL), epoxy, and a diisocyanate compound.

These methods for adhesive bonding of polyester fibers may cause environmental problems due to the use of chemicals such as resorcinol, formalin, and ammonia.

WIPO Publication Nos. WO2013/017421 and WO2013/017422 disclose a method of providing an environmentally friendly adhesive using polyphenol or phloroglucinol and aromatic polyaldehyde having the same reactive functional groups as a substitute for resorcinol and formalin. However, this method for adhesive bonding of polyester fibers uses a substance with low water solubility, and thus requires a procedure of modifying this substance through a separate reaction process so that it may be used in water. In addition, the viscosity of the adhesive solution may increase due to the use of the high-molecular weight substance, so that uniform surface treatment may be difficult.

Meanwhile, WIPO Publication No. WO2015/188939 discloses an environmentally friendly adhesive that uses acrylic resin and epoxy/isocyanate to replace resorcinol and formalin. However, this environmentally friendly adhesive uses acidic acrylic resin, so that it requires a separate procedure of adjusting the pH to an alkaline pH to enhance compatibility with latex. Furthermore, there is no effect of improving high-temperature adhesion.

Korean Patent Application Publication No. 10-2017-0085882 discloses a method of preparing an environmentally friendly second treatment solution by using an epoxidized phenolic resin and a polybutadiene-maleic anhydride copolymer to replace resorcinol-formalin resin and adding rubber latex. The epoxidized phenolic resin and the polybutadiene-maleic anhydride copolymer exhibit excellent water solubility and water dispersibility, so that the adhesive may be prepared using water without a separate modification process and may also exhibit excellent adhesion without the use of hazardous substances such as resorcinol or formalin. However, in this method for adhesive bonding of polyester fibers, the adhesion measured at a high temperature of about 150°C (hereinafter referred to as "high-temperature adhesion") after vulcanization with rubber (at 160°C for 20 minutes) is low. The reason for this is that the physical/chemical bonding strength between the polyester surface and the first treatment solution is insufficient and the bond between the second treatment solution and the rubber may be broken down at high temperatures.

In addition, Japanese Patent Application Publication No. 2002-363228 discloses a method of improving heat resistance by adding styrene sulfonate to vinylpyridine latex during synthesis. Styrene sulfonate may improve heat resistance within the latex because it contains both a sulfonate and a styrene double bond. However, the synthesis method including adding the heat-resistant additive to the latex used in the second treatment solution cannot prevent the decline in high-temperature adhesion that occurs between the polyester surface and the first treatment solution. Furthermore, styrene sulfonate, which is an additive intended to improve heat resistance, is contained in the latex, and thus cannot contribute to improving the strength of bonding with the epoxy and isocyanate used in the first treatment solution.

### Disclosure

### Technical Problem

An object of the present invention is to provide an adhesive composition for a polyester tire cord, which is environmentally friendly and may minimize the influence of external environments such as temperature and humidity to enable uniform application of an adhesive solution, thereby improving manufacturing process efficiency, reducing production costs, and improving quality uniformity.

Another object of the present invention is to provide a method of manufacturing a polyester tire cord using an adhesive composition having excellent high-temperature adhesion and being environmentally friendly.

Still another object of the present invention is to provide a high-performance tire cord which, by having reduced stiffness and improved high-temperature adhesion, may prevent delamination between rubber and the tire cord from occurring when the tire is driven at high speed.

### Technical Solution

One aspect of the present invention for achieving the above-described objects is directed to an adhesive composition for a polyester tire cord, the adhesive composition including:
a first treatment solution including a blocked diisocyanate, an epoxy compound, and a salt containing an anionic functional group; and
a second treatment solution including an epoxidized phenolic resin, a polybutadiene-maleic anhydride copolymer, vinylpyridine latex, and isoprene rubber latex.

Another aspect of the present invention for achieving the above-described objects is directed to a method for manufacturing a polyester tire cord, the method including:
preparing a first treatment solution including a blocked diisocyanate, an epoxy compound, and a salt containing an anionic functional group;
passing a polyester raw cord through the first treatment solution while applying a tensile force to the polyester raw cord;
drying and heat-treating the raw cord that has passed through the first treatment solution;
passing the heat-treated polyester raw cord through a second treatment solution including an epoxidized phenolic resin, a polybutadiene-maleic anhydride copolymer, vinylpyridine latex, and at least one isoprene rubber latex; and
drying and stabilizing the raw cord that has passed through the second treatment solution.

Still another aspect of the present invention for achieving the above-described objects is directed to a polyester tire cord having excellent high-temperature adhesion, manufactured by the method for manufacturing a polyester tire cord.

### Advantageous Effects

According to the present invention, in the manufacturing of a polyester tire cord, the bonding strength between a polyester raw cord and a first treatment solution may be increased by treating the raw cord with the first treatment solution including a salt containing an anionic functional group, and then the crosslinking density may be increased by treating the raw cord with the second treatment solution including isoprene rubber latex, whereby the polyester tire cord not only has excellent high-temperature adhesion, but is also environmentally friendly because it does not use environmentally hazardous substances. Furthermore, by minimizing the influence of external environments to enable uniform application of the treatment solutions, manufacturing process efficiency may be improved and production costs may be reduced. This polyester tire cord may exhibit high heat-resistant adhesion, rubber coverage, and excellent heat resistance.

### Mode for Carrying Out the Invention

The present invention may be subjected to various modifications and may have various forms, and thus it should be understood that the present invention includes all modifications, equivalents, and substitutes included in the spirit and technical scope of the present invention.

In the present application, it should be understood that terms such as "include" or "have" are intended to specify the presence of features, numbers, steps, operations, components, parts, or combination thereof described in the specification, but does not exclude the possibility of the presence or addition of one or more other features, numbers, steps, operations, components, parts, or combinations thereof.

According to the present invention, it is possible to provide an adhesive composition having excellent high-temperature adhesion and being environmentally friendly by applying, as a heat-resistant additive, a salt containing an anionic functional group such as a sulfonic acid group, a sulfuric acid group, a phosphonic acid group, a phosphoric acid group, a phosphorous acid group, a phenolic hydroxyl group, or a carboxylic acid group to a first treatment solution to improve high-temperature adhesion, and adding isoprene rubber latex having a high crosslinking density to a second treatment solution, and a method of manufacturing a polyester tire cord using the same.

Hereinafter, an adhesive composition for a polyester tire cord according to the present invention, a method of manufacturing a polyester tire cord using the same, and a polyester tire cord manufactured thereby will be described in detail with reference to embodiments.

The adhesive composition for a polyester tire cord according to the present invention includes, as a first treatment solution, at least one epoxy compound selected from the group consisting of glycidyl-based glycerol epoxy, polyglycidyl epoxy, sorbitol epoxy, phenolic novolac epoxy, and cresol novolac epoxy, and as an epoxy curing agent, a blocked diisocyanate including caprolactam, resorcinol, phenol, or the like, which is deblocked by heat.

The blocked diisocyanate is produced by blocking an isocyanate that is blocked so that the reaction between an isocyanate group (-NCO) and a hydroxyl group (-OH) does not proceed at room temperature. The blocked diisocyanate includes at least one of aromatic diisocyanates, including tetramethylene diisocyanate, hexamethylene diisocyanate, octamethylene diisocyanate, 1,6-diisocyanatohexane, diphenyl methane 4,4'-diisocyanate, decamethylene diisocyanate, dodecamethylene diisocyanate, 2,4- or 2,6-tolylene diisocyanate, p-xylene diisocyanate, 2,4'- or 4,4'-diisocyanate diphenylmethane, and 1,3- or 1,4-phenylene diisocyanate.

The content of the epoxy compound is 0.2 to 5.0 wt%, preferably 0.3 to 2.0 wt%, based on the total weight of solids in the first treatment solution. If the content of the epoxy compound is less than 0.2 wt%, adhesive performance may be low because the epoxy content is low; and if the content of the epoxy compound is more than 5.0 wt%, the stiffness of the code may increase due to epoxy curing, which may result in deterioration in code performance such as fatigue resistance.

In addition, the weight ratio of the blocked diisocyanate to the epoxy compound may be 2:1 to 1:5, preferably 1:1 to 1:3. If the weight ratio of the blocked diisocyanate to the epoxy compound is less than 2:1, sufficient curing of the epoxy may not occur, resulting in low adhesion; and if the weight ratio is more than 1:5, side reactions such as self-reaction of the curing agent may occur due to an excessive amount of the curing agent, resulting in low adhesion.

According to the present invention, a salt containing an anionic functional group, such as a sulfonic acid (salt) group, a sulfuric acid (salt) group, a phosphonic acid (salt) group, a phosphoric acid (salt) group, a phosphorous acid (salt) group, a phenolic hydroxy (salt) group, or a carboxylic acid (salt) group, is used to improve high-temperature adhesion. In this case, the anionic functional group means a functional group that may take the form of an anion in water.

The weight ratio between the epoxy compound and the salt containing an anionic functional group is preferably 5:1 to 1:3, more preferably 3:1 to 1:2. If the weight ratio between the epoxy compound and the salt containing an anionic functional group is less than 5:1, it may be difficult to expect the effect of improving high-temperature adhesion by the anionic functional group present in the salt; and if the weight ratio is more than 1:3, an excessive amount of anion added may cause a decrease in the initial adhesion due to the reaction between the fiber surface and the anion.

The salt containing an anionic functional group has high reactivity with a PET raw cord, and at the same time, has high reactivity with epoxy because it has the anionic group, so that it may increase the bonding strength between the PET raw cord and epoxy. In addition, it may also react with epoxidized phenolic resin and maleic anhydride of the second treatment solution, thereby improving high-temperature adhesion.

In the present invention, the type of salt included in the salt containing an anionic functional group is not particularly limited, but examples thereof include alkali metal salts such as lithium salts, sodium salts, and potassium salts, salts of group 2 elements such as calcium salts, amine salts, and ammonium salts. Among these salts, alkali metal salts are preferred, and sodium salts are more preferred. The types of salts may be used alone or in combination of two or more.

The salt containing an anionic functional group includes a substituted or unsubstituted alkyl group having 1 to 20 carbon atoms, a substituted or unsubstituted aryl group having 6 to 60 ring carbon atoms, or a substituted or unsubstituted heteroaryl group having 2 to 60 ring carbon atoms. For example, the heteroaryl group may contain O, N, or S as a heteroatom. In addition, the salt containing an anionic functional group may include, as a substituent, hydrogen, deuterium, a substituted or unsubstituted alkyl group having 1 to 20 carbon atoms, a substituted or unsubstituted alkylene group having 1 to 20 carbon atoms, a substituted or unsubstituted aryl group having 6 to 60 ring carbon atoms, or a substituted or unsubstituted heteroaryl group having 2 to 60 ring carbon atoms.

As a salt containing an anionic functional group, which has a sulfonic acid (salt) group, for example, a sulfonic acid salt such as alkyl sulfonic acid (e.g., methanesulfonic acid, 2-propanolsulfonic acid, or lauryl sulfonic acid), alkyl diphenyl ether disulfonic acid (e.g., lauryl diphenyl ether disulfonic acid), or aromatic sulfonic acid (e.g., benzenesulfonic acid, styrene sulfonic acid, p-toluene sulfonic acid, n-dodecylbenzenesulfonic acid, 2-naphthalenesulfonic acid, or lauryl naphthalenesulfonic acid) may be used.

As a salt containing an anionic functional group, which has a sulfuric acid (salt) group, for example, an alkyl sulfate ester salt (e.g., ammonium lauryl sulfate), a polyoxyalkylene alkyl ether sulfate ester salt, a polyoxyalkylene allyl ether sulfate ester salt, a polyoxyalkylene allyl phenyl ether sulfate ester salt (e.g., polyoxyethylene allyl phenyl ether sulfate ester salt), a polyoxyalkylene alkyl allyl phenyl ether sulfate ester salt (e.g., polyoxyethylene alkyl allyl phenyl ether sulfate ester salt), a polyoxyalkylene phenyl ether sulfate ester salt (e.g., polyoxyethylene phenyl ether sulfate ester salt), a polyoxyalkylene polycyclic phenyl ether sulfate ester salt, or the like may be used.

As a salt containing an anionic functional group, which has a phosphonic acid (salt) group, for example, dodecylphosphonic acid may be used.

As a salt containing an anionic functional group, which has a phosphoric acid (salt) group, for example, a phosphate such as monoalkyl phosphoric acid, alkyl ether phosphoric acid, polyoxyethylene alkyl ether phosphoric acid, polyoxyethylene allyl phenyl ether phosphoric acid, or polyoxyethylene alkyl phenyl ether phosphoric acid may be used.

Unlike the case where a treatment solution (RFL) including water, resorcinol, formalin, rubber latex, ammonia, etc. is used, the adhesive for a polyester tire cord according to the present invention includes, as a second treatment solution, a rubber latex capable of interacting with rubber, in addition to an epoxidized phenolic resin (e.g., VPW1942/52W from Allnex) and a polybutadiene-maleic anhydride copolymer (e.g., Ricobond 7004 from Crayvalley), and may further include at least one isoprene rubber latex having a double bond to increase the crosslinking density by co-vulcanization of the adhesive solution and the rubber, thereby improving high-temperature adhesion.

The content of the epoxidized phenolic resin is suitably 1.0 to 5.0 wt%, preferably 1.5 to 3.0 wt%, based on the total weight of solids in the second treatment solution. If the content of the epoxidized phenolic resin is less than 1.0 wt%, it may be difficult to develop adhesion to rubber; and if the content is more than 5.0 wt%, there may be no increase in adhesion, and processability may be reduced due to an excessively high content of the resin.

The weight ratio between the epoxidized phenol resin and the polybutadiene-maleic anhydride copolymer is suitably 4:1 to 1:2, preferably 3:1 to 1:1. If the content of the polybutadiene-maleic anhydride copolymer is less than 4:1, it may be difficult to expect an effect of improving the bonding strength between the epoxidized phenol resin and the latex; and if the content of the polybutadiene-maleic anhydride copolymer is more than 1:2, adhesion may be reduced due to an increase in the content of the polybutadiene-maleic anhydride copolymer.

In the present invention, at least one isoprene rubber latex included in the second treatment solution may be any suitable isoprene rubber latex, and for example, may be any one or more of synthetic isoprene rubber latex (IR), natural isoprene rubber latex (NR), and combinations thereof. In an embodiment, the isoprene rubber latex may be natural isoprene rubber latex (NR).

The weight ratio between the isoprene rubber latex and the vinylpyridine latex is preferably 1:1 to 1:20, more preferably 1:1.5 to 1:15. If the content of the isoprene rubber latex is more than 1:1 relative to the vinylpyridine latex, adhesion and processability may be reduced; and if the content of the isoprene rubber latex is less than 1:20, it may be difficult to expect the effect of improving high-temperature adhesion, due to an increase in the crosslinking density of the isoprene rubber latex.

In the present invention, the rubber latex capable of interacting with rubber includes at least one of vinylpyridine-styrene-butadiene, vinylpyridine-styrene-butadiene modified with carboxylic acid, styrene-butadiene, styrene-butadiene modified with carboxylic acid, and natural rubber latex.

The second treatment solution according to the present invention may be used immediately after mixing water, the epoxidized phenol resin, the polybutadiene-maleic anhydride, copolymer and vinylpyridine latex with at least one isoprene rubber latex, or vinylpyridine latex, styrene-butadiene latex, and at least one rubber latex, and thus no reaction aging time is required and the adhesive solution preparation process may be simplified, thereby reducing costs. This increase in process speed may provide economic benefits because it has the external effect of lowering the unit price of the product. In addition, as any environmentally regulated substances such as resorcinol, formalin, or ammonia are not used at all in the preparation of the adhesive solution of the present invention, it is possible to provide an environmentally friendly adhesive solution. Also, by minimizing the influence of external environments such as temperature and humidity, uniform application of the adhesive solution becomes possible, thereby improving quality uniformity, and the adhesive solution is able to exhibit excellent adhesive properties even at low DPU (Dip Pick Up).

A method for manufacturing a polyester tire cord according to the present invention includes the steps of:
preparing a first treatment solution including a blocked diisocyanate, an epoxy compound, and a salt containing an anionic functional group;
passing a polyester raw cord through the first treatment solution while applying a tensile force to the polyester raw cord;
drying and heat-treating the raw cord that has passed through the first treatment solution;
passing the heat-treated polyester raw cord through a second treatment solution including an epoxidized phenolic resin, a polybutadiene-maleic anhydride copolymer, vinylpyridine latex, and isoprene rubber latex; and
drying and stabilizing the raw cord that has passed through the second treatment solution.

The method for manufacturing a polyester tire cord according to the present invention uses the above-described adhesive composition for a polyester tire cord, and the first treatment solution and the second treatment solution are applied as described above.

According to the method for manufacturing a polyester tire cord according to the present invention, the polyester raw cord is treated with a first treatment solution including a blocked diisocyanate, an epoxy compound, and a salt containing an anionic functional group, whereby the bonding strength between the polyester raw cord and the first treatment solution may be increased, and then the polyester raw cord is treated with a second treatment solution including an epoxidized phenol resin, a polybutadiene-maleic anhydride copolymer, vinylpyridine latex, and isoprene rubber latex, thereby increasing the crosslinking density. Therefore, the method has advantages in that the manufactured tire cord has excellent high-temperature adhesion and environmentally hazardous substances are not used.

The method for manufacturing a polyester tire cord according to the present invention is described in detail as follows.

First, PET chips may be melt-spun to produce PET spun yarn. The produced PET spun yarn may be stretched in multiple stages and wound to produce PET yarn. The produced PET yarn is twisted using a twisting machine, thereby producing a raw cord.

ply twisting and cable twisting may be performed simultaneously or separately, and are not limited to any one method. If ply twisting and cable twisting are performed simultaneously, a direct twister may be used; and if ply twisting and cable twisting are performed separately, a ring twister (RT) may be used. The number of cable twists/ ply twists may be 200/200 twists per meter (TPM) or more and 500/500 TPM or less. If the number of cable twists/ply twists is less than 200/200 TPM, the elongation at break of the PET raw cord may decrease, resulting in a decrease in fatigue resistance. If the number of cable twists/ ply twists is more than 500/500 TPM, the strength of the PET raw cord may be significantly reduced.

The raw cord for a tire cord, manufactured as described above, may be manufactured into a tire cord through a process of passing it through a first treatment solution and a second treatment solution. More specifically, the step of treating the raw cord for a tire cord with the first treatment solution may include the step of passing the raw cord through the first treatment solution while applying a tensile force to the raw cord, and the step of drying and heat-treating the raw cord that has passed through the first treatment solution. In this case, the first treatment solution may include, based on 100 wt% of the first treatment solution, 1.0 to 5.0 wt% of a blocked diisocyanate, 0.3 to 2.0 wt% of an epoxy compound, 0.3 to 2.0 wt% of a salt containing an anionic functional group, and the remainder being water.

In the drying step, moisture is removed, and the drying temperature is preferably 140 to 180°C, and drying is performed for 60 to 180 seconds. Thereafter, through the heat treatment step performed at a temperature of 200 to 250°C for 30 to 150 seconds, the blocked diisocyanate is deblocked and becomes reactive, and thus it chemically reacts with epoxy to impart reactivity to the fiber surface.

Thereafter, the raw code treated with the first treatment solution is treated with the second treatment solution. The step of treating with the second treatment solution may include the step of passing the raw code treated with the first treatment solution through the second treatment solution, and the step of drying and stabilizing the raw code that has passed through the second treatment solution.

The second treatment solution may include, based on 100 wt% of the second treatment solution, 1.5 to 3.0 wt% of an epoxidized phenolic resin, 0.5 to 2.5 wt% of a polybutadiene-maleic anhydride copolymer, 10.0 to 20.0 wt% of vinylpyridine latex, 0.5 to 10.0 wt% of isoprene rubber latex, and the remainder being water, in order to increase high-temperature adhesion by increasing crosslinking density.

The epoxidized phenolic resin may function to interact with rubber. This epoxidized phenolic resin may be produced by attaching a high-molecular-weight polyisocyanate to the end of an epoxy resin synthesized from bisphenol-A and epichlorohydrin, novolac and epichlorohydrin, or resol and epichlorohydrin, followed by dispersion in an organic solvent such as butanol.

Alternatively, the epoxidized phenolic resin may be produced by subjecting novolac or resol to addition polymerization with a liquid epoxy resin synthesized using bisphenol-A and epichlorohydrin, thereby synthesizing a polymeric epoxy, and then attaching an isocyanate blocked with resorcinol, phenol, caprolactam, etc. to the end of the epoxy, followed by dispersion in an organic solvent such as butanol. As another synthetic method, the epoxidized phenolic resin may be produced by synthesizing an epoxy in the form of a novolac or resol using bisphenol-A and epichlorohydrin, and then attaching a resorcinol or resorcinol-formalin resin to the end of the epoxy, followed by dispersion in an organic solvent. In addition to the above-described synthetic methods, a mixture may be prepared by mixing an epoxy in novolac or resol form and phenolic resin with water, a co-solvent, and a dispersant, and then applying a very strong shear force thereto while heating. This mixture contains small particles uniformly dispersed therein and may be maintained in a stable state by the dispersant during the cooling process. In this case, alcohol or ether glycol may be used as the co-solvent.

The content of the vinylpyridine latex is preferably 10.0 to 20.0 wt% based on 100 wt% of the second treatment solution. If the content of the vinylpyridine latex is less than 10.0 wt%, sufficient adhesion to rubber may not be achieved; and if the content of the vinylpyridine latex is more than 20.0 wt%, the initial adhesion increases, but a thick latex layer is formed, which may cause delamination in the latex layer at high temperatures. In addition, a large amount of latex attached increases stiffness, which reduces fatigue resistance. In addition, the latex adheres to heat treatment equipment rollers, which reduces workability or increases defects in the final product.

The polyester tire cord manufactured as described above not only has excellent high-temperature adhesion by having increased crosslinking density, but is also environmentally friendly as it does not use environmentally hazardous substances. Furthermore, by minimizing the influence of external environments to enable uniform application of the treatment solutions, manufacturing process efficiency may be improved and production costs may be reduced.

Hereinafter, the present invention will be described in detail with reference to specific examples. The examples presented are intended merely to illustrate the present invention and are not intended to limit the scope of the claims of the present invention.

### <Examples 1 to 10 and Comparative Examples 1 and 2>

First treatment solution and second treatment solution compositions were prepared using the components and contents shown in Table 1 below. A raw cord (PET 1500 d/2 370 TPM) produced by twisting 1500-denier 2-ply polyester fiber for a tire cord at a ply twist number of 370 TPM and a cable twist number of 370 TPM was immersed and passed through the first treatment solution while applying a tensile force of 0.1 g/d thereto, dried at 160°C for 2 minutes in a drying zone, and heat-treated at 245°C. The polyester raw cord subjected to the heat treatment process was immersed again in the second treatment solution, dried at 160°C, and stabilized at 245°C, thereby manufacturing a polyester tire cord.

### <Experimental Example>

The physical properties of the polyester tire cord manufactured in each of Examples 1 to 10 and Comparative Examples 1 and 2 were evaluated using the following methods, and the results are shown in Table 1 below.

### - Adhesion (kgf) evaluation method: H-test

To measuring the adhesion of the heat-treated tire cord to rubber, the tire cord was placed in a rubber block and vulcanized at 160°C for 20 minutes (initial) or 170°C for 60 minutes (heat-resistant) under a pressure of 50 kgf/cm, and then the adhesion was measured using an Instron low-speed tensile tester at a tensile speed of 200 m/min. The same test was performed 10 times and the average value was obtained. Other methods were performed in accordance with ASTM D4776-98.
- Adhesion measurement conditions: H-test (ASTM D4776-98) vulcanization conditions (initial: at 160°C for 20 minutes, and heat-resistant: 170°C for 60 minutes).
- CRA test (strip adhesion) vulcanization conditions (initial: at 160°C for 20 minutes, and heat-resistant: at 160°C for 90 minutes).

High-temperature adhesion: CRA test. 5 minutes after vulcanization at 160°C for 20 minutes, evaluation was performed at 150°C using a tensile tester equipped with a high-temperature chamber.
- Adhesion index: the percentage of each CRA adhesion value when the adhesion of an existing tire cord manufactured using a first treatment solution (epoxy compound/blocked diisocyanate) and a second treatment solution (RFL) is set to 100.
- Rubber adhesion rate: after completing the evaluation of high-temperature adhesion, the degree of rubber adhesion in the part that has been delaminated from the rubber was visually assessed. The rubber adhesion rate was evaluated in 5 grades: A, B, C, D, and E (grade A: rubber adhesion rate of 100 to 80%, grade B: 80 to 60%, grade C: 60 to 40%, grade D: 40 to 20%, and grade E: 20% or less).

**[Table 1]**

| | | Ex. 1 | Ex. 2 | Ex. 3 | Ex. 4 | Ex. 5 | Ex. 6 | Ex. 7 | Ex. 8 | Ex. 9 | Ex. 10 | Comp. Ex. 1 | Comp. Ex. 2 |
|---|---|---|---|---|---|---|---|---|---|---|---|---|---|
| First treatment solution composition (wt%) | Sorbitol epoxy | 1.0 | 0.7 | 0.7 | 1.0 | 0.7 | 0.7 | 1.0 | 0.7 | 0.7 | 1.2 | 1.0 | 0.7 |
| | Cresol novolac epoxy | 0.5 | 0.2 | - | 0.5 | 0.2 | - | 0.5 | 0.2 | - | 0.4 | - | 0.4 |
| | Isocyanate | 2.5 | 2.5 | 2.0 | 3.0 | 2.5 | 2.0 | 2.5 | 2.5 | 2.0 | | 3.0 | 2.9 |
| | Benzenesulfo nic acid sodium salt | 0.5 | 0.8 | 1.4 | - | - | - | - | - | - | 0.5 | - | - |
| | Dodecyl phosphate | - | - | - | 0.5 | 0.8 | 1.4 | - | - | - | 0.3 | - | - |
| | Polyoxyalkyle ne alkyl ether phosphate | - | - | - | - | - | - | 0.5 | 0.8 | 1.4 | - | - | - |
| Second treatment solution composition (wt%) | Caustic soda | - | - | - | - | - | - | - | - | - | - | 0.1 | - |
| | Resorcinol | - | - | - | - | - | - | - | - | - | - | 2.4 | - |
| | Formalin | - | - | - | - | - | - | - | - | - | - | 0.8 | - |
| | Epoxidized phenolic resin | 2.5 | 2.5 | 2.0 | 2.0 | 2.5 | 2.0 | 2.5 | 2.5 | 2.0 | 2.7 | - | 2.5 |
| | Polybutadiene -maleic anhydride copolymer | 1.0 | 1.0 | 2.0 | 1.5 | 1.0 | 2.0 | 1.0 | 1.0 | 2.0 | 2.0 | - | 1.0 |
| | Vinylpyridine latex | 18.0 | 15.0 | 16.0 | 16.0 | 15.0 | 16.0 | 12.0 | 15.0 | 16.0 | 15.0 | 20.0 | 16.5 |
| | Styrene-butadiene latex | - | 2.0 | 1.0 | - | 2.0 | 1.0 | - | 2.0 | 1.0 | 1.0 | - | 2.0 |
| | Natural rubber latex | 1.5 | 1.0 | 1.8 | 2.5 | 1.0 | 1.8 | 8.0 | 1.0 | 1.8 | 2.0 | - | - |
| | Ammonia | - | - | - | - | - | - | - | - | - | - | 0.2 | - |
| Adhesion (H-test) | Initial adhesion (at 160°C for 20 min) | 19.4 | 20.0 | 18.7 | 19.2 | 19.0 | 18.8 | 18.6 | 19.3 | 18.7 | 18.8 | 18.5 | 18.8 |
| | Heat-resistant adhesion (at 170°C for 60 min) | 12.5 | 13.0 | 12.0 | 13.0 | 12.0 | 12.2 | 12.4 | 12.7 | 12.0 | 12.6 | 11.0 | 11.6 |
| Adhesion (CRA-test) | Initial adhesion (at 160°C for 20 min) | 3.1 | 3.3 | 3.3 | 3.2 | 3.1 | 3.1 | 3.2 | 3.3 | 3.2 | 3.0 | 3.0 | 2.1 |
| | Heat-resistant adhesion (at 160°C for 90 min) | 2.3 | 2.3 | 22 | 2.4 | 2.1 | 2.2 | 2.2 | 2.3 | 2.2 | 2.2 | 2.1 | 2.1 |
| | High-temperature adhesion (measured at 150°C after vulcanization at 160°C for 20 min) | 1.4 | 1.7 | 1.6 | 1.4 | 1.5 | 1.4 | 1.3 | 1.4 | 1.4 | 1.3 | 1.0 | 0.9 |
| Initial adhesion index | | 103 | 110 | 110 | 107 | 103 | 103 | 107 | 110 | 107 | 100 | 100 | 107 |
| Heat-resistant adhesion index | | 110 | 110 | 105 | 114 | 100 | 105 | 105 | 100 | 105 | 105 | 100 | 100 |
| High-temperature adhesion index | | 140 | 170 | 160 | 140 | 150 | 140 | 130 | 140 | 140 | 130 | 100 | 90 |
| Rubber adhesion rate | | B | A | A | B | B | B | B | B | B | B | C | C |

Referring to Table 1 above, Examples 1 to 10 include the salt containing an anionic functional group in the first treatment solution, whereas Comparative Examples 1 and 2 do not include the salt containing an anionic functional group in the first treatment solution. In addition, Examples 1 to 10 include the rubber latex containing a double bond in the second treatment solution, whereas Comparative Example 2 does not include the rubber latex containing a double bond in the second treatment solution. In addition, Comparative Example 1 includes environmentally regulated substances such as resorcinol and formalin in the second treatment solution.

Referring to the adhesion index and rubber adhesion rate in Table 1 above, the adhesive compositions for a polyester tire cord, prepared in Examples 1 to 10, have excellent high-temperature adhesion, and thus may improve the manufacturing process efficiency of polyester tire cords, reduce production costs, and improve quality uniformity. In addition, these compositions are environmentally friendly because no environmentally regulated substances are used during the preparation of the compositions.

While the preferred embodiments of the present invention have been described in detail above, it will be apparent to those skilled in the art that the present invention is not limited to the above-described embodiments, and that the configuration of the present invention may be variously modified and altered without departing from the spirit or scope of the present invention. Accordingly, the scope of protection of the present invention should be defined by the appended claims and equivalents thereto.

## Claims

1. An adhesive composition for a polyester tire cord, the adhesive composition comprising:
a first treatment solution comprising a blocked diisocyanate, an epoxy compound, and a salt containing an anionic functional group; and
a second treatment solution comprising an epoxidized phenolic resin, a polybutadiene-maleic anhydride copolymer, vinylpyridine latex, and at least one isoprene rubber latex.

2. The adhesive composition of claim 1, wherein a weight ratio between the epoxy compound and the salt containing the anionic functional group is 5:1 to 1:3.

3. The adhesive composition of claim 1, wherein a weight ratio between the at least one isoprene rubber latex and the vinylpyridine latex is 1:1 to 1:20.

4. The adhesive composition of claim 1, wherein a weight ratio between the epoxidized phenolic resin and the polybutadiene-maleic anhydride copolymer is 4:1 to 1:2.

5. The adhesive composition of claim 1, wherein the anionic functional group is selected from the group consisting of a sulfonic acid group, a sulfuric acid group, a phosphonic acid group, a phosphoric acid group, a phosphorous acid group, a phenolic hydroxy group, and a carboxylic acid group.

6. The adhesive composition of claim 1, wherein a salt contained in the salt containing the anionic functional group is selected from the group consisting of a lithium salt, a sodium salt, a potassium salt, a calcium salt, an amine salt, and an ammonium salt.

7. The adhesive composition of claim 1, wherein the isoprene rubber latex is selected from synthetic isoprene rubber latex (IR), natural isoprene rubber latex (NR), and a combination thereof.

8. A method for manufacturing a polyester tire cord, the method comprising:
preparing a first treatment solution comprising a blocked diisocyanate, an epoxy compound, and a salt containing an anionic functional group;
passing a polyester raw cord through the first treatment solution while applying a tensile force to the polyester raw cord;
drying and heat-treating the raw cord that has passed through the first treatment solution;
passing the heat-treated polyester raw cord through a second treatment solution comprising an epoxidized phenolic resin, a polybutadiene-maleic anhydride copolymer, vinylpyridine latex, and at least one isoprene rubber latex; and
drying and stabilizing the raw cord that has passed through the second treatment solution.

9. The method of claim 8, wherein a weight ratio between the epoxy compound and the salt containing the anionic functional group is 5:1 to 1:3.

10. The method of claim 8, wherein a weight ratio between the at least one isoprene rubber latex and the vinylpyridine latex is 1:1 to 1:20.

11. The method of claim 8, wherein a weight ratio between the epoxidized phenolic resin and the polybutadiene-maleic anhydride copolymer is 4:1 to 1:2.

12. The method of claim 8, wherein the anionic functional group is selected from the group consisting of a sulfonic acid group, a sulfuric acid group, a phosphonic acid group, a phosphoric acid group, a phosphorous acid group, a phenolic hydroxy group, and a carboxylic acid group.

13. The method of claim 8, wherein the isoprene rubber latex is selected from synthetic isoprene rubber latex (IR), natural isoprene rubber latex (NR), and a combination thereof.

14. A polyester tire cord manufactured by the method for manufacturing a polyester tire cord according to any one of claims 8 to 13, and having a heat-resistant adhesion to rubber of 12 kgf or more as measured by an H-test.
